# EUROPEAN PATENT SPECIFICATION

(11) **EP 0 668 702 B1**
(45) Date of publication and mention of the grant of the patent: **23.09.1998**
(21) Application number: 95102447.0
(22) Date of filing: 21.02.1995
(51) Int. Cl.: H04N 9/78

(54) **Luminance-chrominance signal separation circuit**
Schaltung zur Trennung des Helligkeitssignals von einem Farbsignal
Circuit de séparation des signaux de luminance et de chrominance

(30) Priority: 21.02.1994 JP 22603/94
(43) Date of publication of application: 23.08.1995
(73) Proprietor: TDK Corporation, Chuo-ku, Tokyo-to 103 (JP)
(72) Inventor: Nakane, Shuuhei, Chuo-ku, Tokyo (JP); Toyoda, Terumasa, Chuo-ku, Tokyo (JP); Tomita, Hirofumi, Chuo-ku, Tokyo (JP)
(74) Representative: Grünecker, Kinkeldey, Stockmair & Schwanhäusser Anwaltssozietät

(56) References cited:
- EP-A- 0 311 461
- US-A- 5 041 904
- PATENT ABSTRACTS OF JAPAN vol. 18, no. 332 (E-1567) 23 June 1994 & JP-A-06 078 331 (TDK CORPORATION)

## Description

### Field of the Invention

The invention relates to a luminance-chrominance signal separation circuit which is used in an apparatus handling a video signal according to the PAL (Phase Alternation by Line) system, such as a color television (color TV) and a video tape recorder (VTR), to separate an input signal into a luminance signal (Y signal) and a chrominance signal (C signal).

### Prior Art

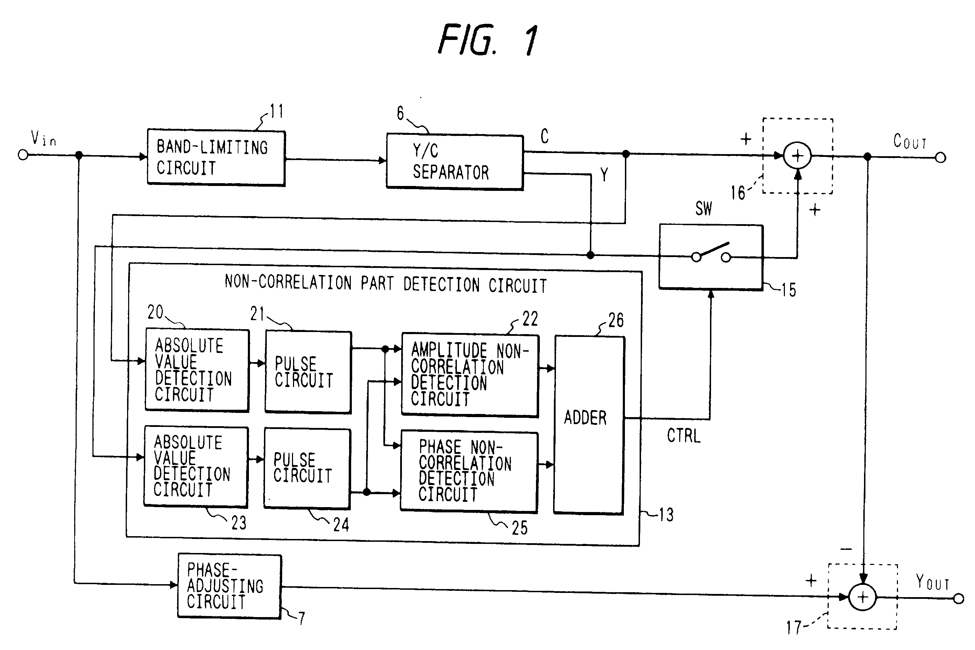

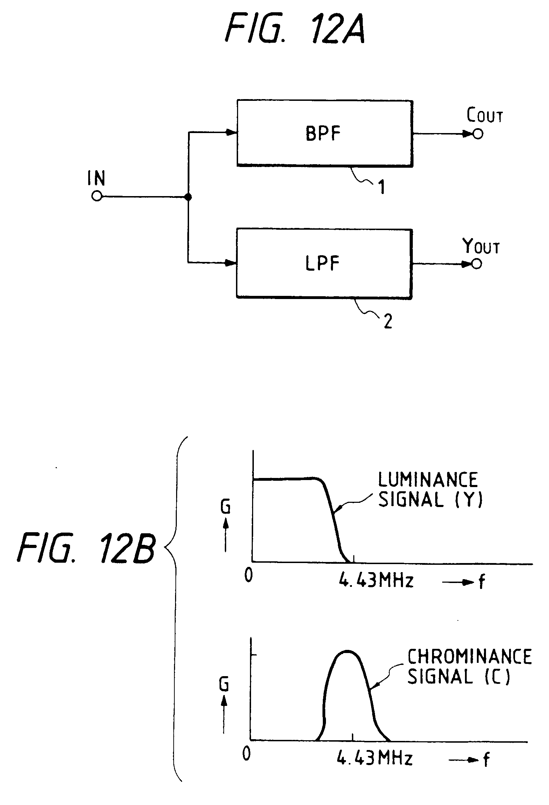

Figs. 12A and 12B illustrate a prior art example. In Fig. 12A is a block diagram of a luminance-chrominance signal separation circuit, and Fig. 12B is a view showing output characteristics of the luminance-chrominance signal separation circuit. In Fig. 12A, 1 designates a band-pass filter (BPF); 2, a low-pass filter (LPF); IN, an input terminal for a video signal; Cₒᵤₜ, an output terminal for a chrominance signal; and Yₒᵤₜ, an output terminal for a luminance signal.

Conventionally, PAL color video equipments handling a video signal according to the PAL system use a luminance-chrominance signal separation circuit (Y/C separation circuit) such as shown in Fig. 12A, in order to separate the video signal into a luminance signal (Y signal) and a chrominance signal (C signal).

The luminance-chrominance signal separation circuit consists of the band-pass filter (BPF) 1 and the low-pass filter (LPF) 2. A video signal (PAL composite signal) input to the input terminal IN is applied to the band-pass filter 1 and the low-pass filter 2.

The band-pass filter 1 allows only a signal, among the input video signal, which is in a predetermined frequency band, to pass through the filter, thereby outputting a chrominance signal C to the output terminal Cₒᵤₜ.

The low-pass filter 2 allows only a signal, among the input video signal, which is lower than a predetermined frequency, to pass through the filter, thereby outputting a luminance signal Y to the output terminal Yₒᵤₜ. In this way, the luminance signal and the chrominance signal are separated and then output.

In this case, for example, the luminance signal Y and the chrominance signal C respectively obtained from the output terminals Yₒᵤₜ and Cₒᵤₜ have output characteristics shown Fig. 12B. In Fig. 12B, the abscissas indicate a frequency f (MHz) and the ordinates a gain G.

In the output characteristics, the luminance signal is a signal of a frequency lower than 4.43 MHz and the chrominance signal is a signal in the vicinity of 4.43 MHz.

### Problem to be Solved by the Invention

Such a prior art apparatus has the following problems:
(1): A luminance signal is obtained by passing a video signal through a low-pass filter. In a luminance signal, therefore, high frequency components are removed. As a result, the horizontal resolution of a displayed image is deteriorated.
(2): Luminance signal components in the chrominance signal output band, and chrominance signal components in the luminance signal output band remain, so that the cross color and dot crawl effects occur.
(3): It may be considered to use a luminance-chrominance signal separation circuit having a 2H-lines comb filter, in place of the luminance-chrominance signal separator shown as the prior art example. In the alternative circuit, however, at the time of non-correlation, the separation rates of the luminance signal and the chrominance signal are very poor (it is substantially impossible to conduct the signal separation.)

US-A-5 041 904 describes a Y/C separator in which the chrominance pass band at a two-dimensional Y/C separator input is input together with luminance to a correlation detector for detecting presence or absence of amplitude correlation.

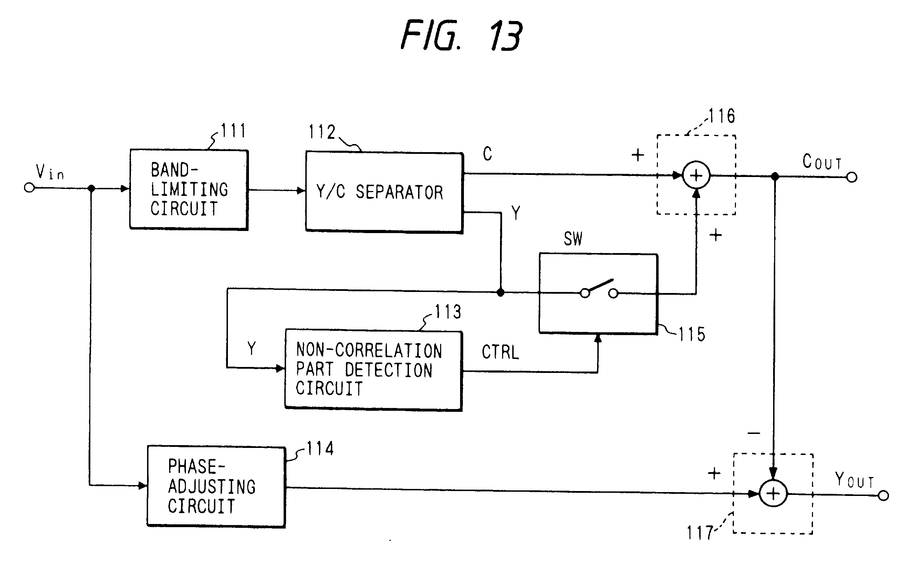

In order to solve the above-mentioned problems, the present applicant have proposed a luminance-chrominance signal separation circuit as shown in Fig. 13. Details are described in an Unexamined Japanese Patent Publication (Kokai) JP-A-6-078331. According to this luminance-chrominance signal separation circuit which receives a PAL video signal and separates the video signal into a luminance signal Y and a chrominance signal C as shown in Fig. 13, the separation circuit comprises: a band-limiting circuit 111; a two-dimensional luminance-chrominance signal separator (two-dimensional Y/C separator) 112; a non-correlation part detection circuit 113 which receives the luminance signal Y from the tow-dimensional Y/C separator to detect non-correlation parts of the input video signal; a switch 115 which is controlled in accordance with the detection of the non-correlation part; the phase-adjusting circuit 114; and the adders 116 and 117.

According to the conventional art of Fig. 13, a PAL video signal (composite signal) Vᵢₙ is input to the band-limiting circuit 111 and the phase-adjusting circuit 114. The band-limiting circuit 111 allows only a signal in a predetermined frequency band (the pass band for the chrominance signal) to pass through the circuit.

The two-dimensional Y/C separator 112 separates the signal which has passed through the band-limiting circuit 111, into a luminance signal Y and a chrominance signal C. However, it is impossible to conduct the Y/C separation at non-correlation part of the input video signal.

The non-correlation part detection circuit 113 receives the luminance signal Y which are output from the two-dimensional Y/C separator 112, and detects non-correlation parts of the input video signal. On the basis of signals indicative of the detection of a non-correlation part, the non-correlation part detection circuit 113 outputs the switch signal CTRL to the switch 115.

When the switch signal CTRL is not output (i.e., in the correlation period), the switch 115 is opened so that the luminance signal Y output from the two-dimensional Y/C separator 112 is not supplied to the adder 16. In contrast, when the non-correlation part detection circuit 113 detects the non-correlation part, the non-correlation part detection circuit 113 outputs the switch signal CTRL so that the switch 15 is closed. This causes the luminance signal Y output from the two-dimensional Y/C separator 112 to be supplied to the adder 116 via the switch 115. In the adder 116, the luminance signal Y is added to the chrominance signal C output from the two-dimensional Y/C separator 112. The addition signal of the adder 116 is output as the chrominance signal to the output terminal Cₒᵤₜ.

When a non-correlation part is not detected by the non-correlation part detection circuit 113, therefore, only the chrominance signal output from the two-dimensional Y/C separator 112 is output as the chrominance signal to the output terminal Cₒᵤₜ. When a non-correlation part is detected, an addition signal of the chrominance signal output and the luminance signal output from the two-dimensional Y/C separator 112 is output as the chrominance signal to the output terminal Cₒᵤₜ.

On the other hand, the phase-adjusting circuit 114 delays the input video signal by a predetermined time, and then outputs the delayed video signal to the adder 117. The adder 117 adds the signal which has passed through the phase-adjusting circuit 7, and the chrominance signal at the output terminal Cₒᵤₜ.

As a result, the separation of the luminance signal and the chrominance signal can be improved.

However, the above-mentioned luminance-chrominance signal separation circuit has problems as follow.

In the detection of a non-correlation part of the input video signal, the non-correlation detecting circuit 113 receives the luminance signal Y only form the two-dimensional Y/C separator 112 and monitors amplitude of the luminance signal Y. Therefore, in the case of the input video signal containing a phase non-correlation part of chrominance signal, the non-correlation detecting circuit 113 cannot detect such phase non-correlation part. Result in, it is impossible to completely detect non-correlation parts which affect the image quality, so that the image deterioration due to a non-correlation part can not be completely eliminated.

### Object of the Invention

It is an object of the invention to provide a luminance-chrominance signal separation circuit which can solve the problems of the prior art, always separate a luminance signal and a chrominance signal in an optimum manner, and improve output characteristics.

### Means for Solving the Problem

The invention provides a Y/C separator as defined in appended claims 1 to 5.

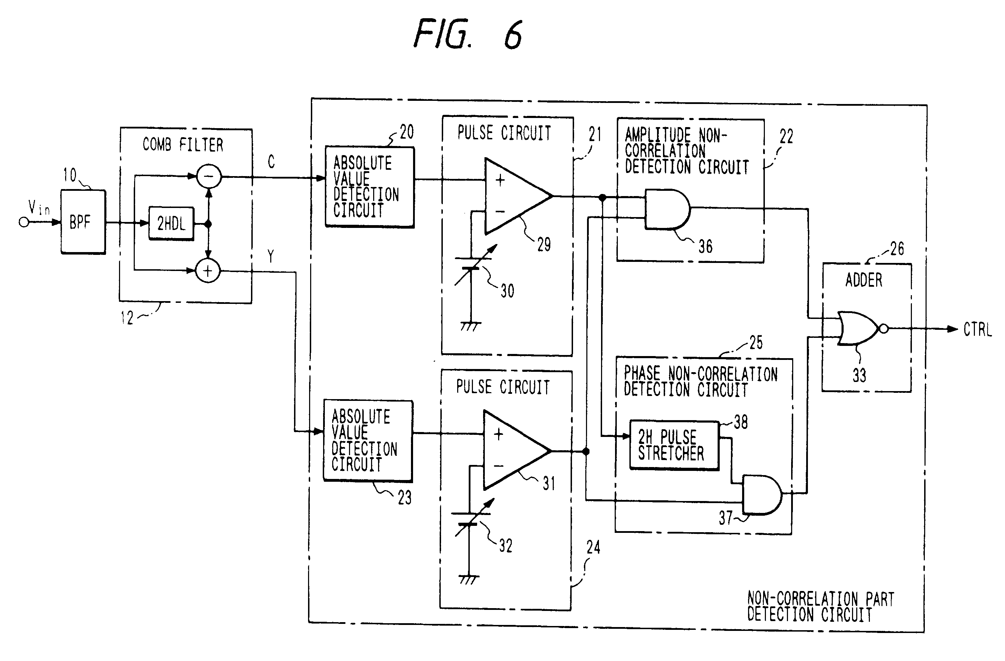

Fig. 1 is a diagram illustrating the principle of the invention. In Fig. 1, 6 designates a two-dimensional luminance-chrominance signal separation circuit (two-dimensional Y/C separator); 7, a phase-adjusting circuit; 11, a band-limiting circuit; 13, a non-correlation part detection circuit; 15, a switch; 16 and 17 adders; 20 and 23 absolute value detection circuits; 21 and 24, pulse circuits; 22 an amplitude non-correlation detection circuit; 25, a phase non-correlation detection circuit; and 26, an addition circuit.

According to the invention, the luminance-chrominance signal separation circuit which receives a video signal according to the PAL system and separates the video signal into a luminance signal Y and a chrominance signal C, comprises: the band-limiting circuit 11; the two-dimensional Y/C separator 6; the non-correlation part detection circuit 13 which, from the luminance signal and the chrominance signal that are output from the two-dimensional separator 6, detects amplitude non-correlation parts of the chrominance signal and the luminance signal, and a phase non-correlation part of the chrominance signal; the switch 15 which is closed and opened in accordance with a non-correlation part detection signal from the non-correlation part detection circuit 13, thereby closing or opening a signal line for the luminance signal and elongating toward an output terminal; the phase-adjusting circuit 7; and the adders 16 and 17.

The non-correlation part detection circuit 13 may comprise: the absolute value detection circuit 20 which detects the absolute value of the chrominance signal output from the two-dimensional Y/C separator 6; the pulse circuit 21 which compares an output of the first absolute value detection circuit 20 with a preset threshold to convert the output into a pulse; the absolute value detection circuit 23 which detects the absolute value of the luminance signal output from the two-dimensional Y/C separator 6; the pulse circuit 24 which compares an output of the second absolute value detection circuit 23 with a preset threshold to convert the output into a pulse; the amplitude non-correlation detection circuit 22 which detects amplitude non-correlation parts of the chrominance signal and the luminance signal on the basis of the output pulses of the pulse circuits 21 and 24; the phase non-correlation detection circuit 25 which detects a phase non-correlation part of the chrominance signal on the basis of the output pulses of the pulse circuits 21 and 24; and the addition circuit 26 which conducts an addition of an output of the amplitude non-correlation detection circuit 22 and an output of the phase non-correlation detection circuit 25, thereby producing a switch signal CTRL for the switch 15.

The operation of the invention based on the above-mentioned configuration will be described with reference to Fig. 1.

When a PAL video signal (composite signal) is input to an input terminal Vᵢₙ, the signal is supplied to the band-limiting circuit 11 and the phase-adjusting circuit 7. The band-limiting circuit 11 allows only a signal in a predetermined frequency band (the pass band for the chrominance signal) to pass through the circuit.

The two-dimensional Y/C separator 6 separates the signal which has passed through the band-limiting circuit 11, into a luminance signal Y and a chrominance signal C. In a non-correlation part, however, it is impossible to conduct the Y/C separation.

The non-correlation part detection circuit 13 receives the luminance signal Y and the chrominance signal C which are output from the two-dimensional Y/C separator 6, and detects amplitude non-correlation parts of the chrominance signal and the luminance signal, and the phase non-correlation part of the chrominance signal. On the basis of signals indicative of the detection of a non-correlation part, the non-correlation part detection circuit 13 outputs the switch signal CTRL to the switch 15.

When the switch signal CTRL is not output (i.e., in the correlation period), the switch 15 is opened so that the luminance signal Y output from the two-dimensional Y/C separator 6 is not supplied to the adder 16.

In contrast, when the non-correlation part detection circuit 13 detects the non-correlation part, the non-correlation part detection circuit 13 outputs the switch signal CTRL so that the switch 15 is closed. This causes the luminance signal Y output from the two-dimensional Y/C separator 6 to be supplied to the adder 16 via the switch 15. In the adder 16, the luminance signal Y is added to the chrominance signal C output from the two-dimensional Y/C separator 6. The addition signal of the adder 16 is output as the chrominance signal to the output terminal Cₒᵤₜ.

When a non-correlation part is not detected by the non-correlation part detection circuit 13, therefore, only the chrominance signal output from the two-dimensional Y/C separator 6 is output as the chrominance signal to the output terminal Cₒᵤₜ. When a non-correlation part is detected, an addition signal of the chrominance signal output and the luminance signal output from the two-dimensional Y/C separator 6 is output as the chrominance signal to the output terminal Cₒᵤₜ.

On the other hand, the phase-adjusting circuit 7 delays the input video signal by a predetermined time, and then outputs the delayed video signal to the adder 17. The adder 17 adds the signal which has passed through the phase-adjusting circuit 7, and the chrominance signal at the output terminal Cₒᵤₜ.

As a result, the separation of the luminance signal and the chrominance signal is always conducted in an optimum manner, and hence the output characteristics can be improved.

### BRIEF DESCRIPTION OF THE DRAWINGS

Fig. 1 is a diagram illustrating the principle of the invention;
Fig. 2 is a block diagram of a luminance signal/chrominance signal separation circuit of an embodiment;
Fig. 3 shows a specific example of the circuit of Fig. 2;
Fig. 4 is a block diagram of the non-correlation part detection circuit of the embodiment;
Fig. 5 shows specific example 1 of the circuit of Fig. 4;
Fig. 6 shows specific example 2 of the circuit of Fig. 4;
Fig. 7 is chart 1 showing waveforms of various portions (in the case where there is a non-correlation part in the amplitude of the C component) in the embodiment;
Fig. 8 is chart 2 showing waveforms of various portions (in the case where there is a non-correlation part in the amplitude of the C component) in the embodiment;
Fig. 9 is chart 3 showing waveforms of various portions (in the case where there is a non-correlation part in the amplitude of the Y component) in the embodiment;
Fig. 10 is chart 4 showing waveforms of various portions (in the case where there is a non-correlation part in the phase of the C component) in the embodiment;
Figs. 11A and 11B show the output characteristics in the embodiment;
Figs. 12A and 12B illustrate a prior art example; and
Fig. 13 is a diagram illustrating the principle of the conventional luminance-chrominance separation circuit;

### Embodiments

Hereinafter, embodiments of the invention will be described with reference to the drawings.

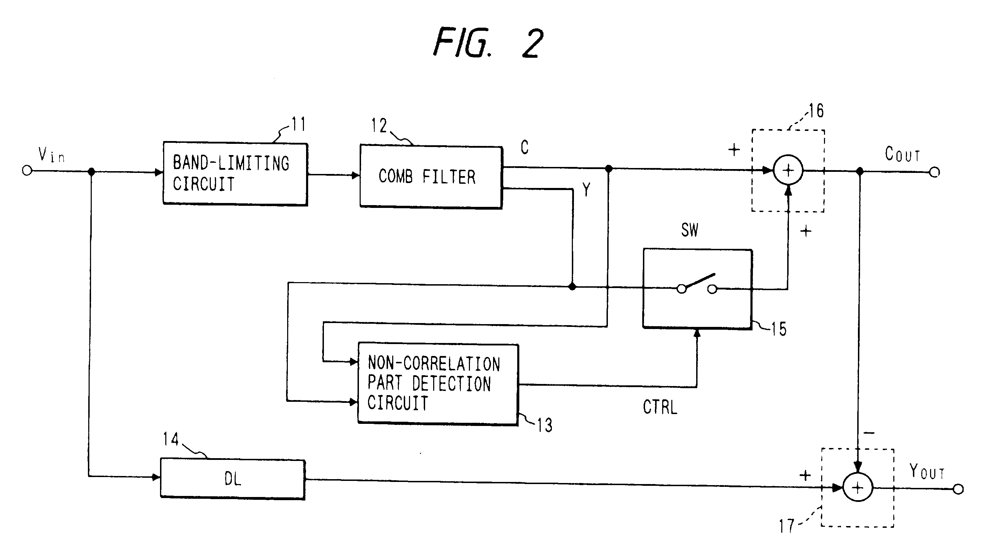

Figs. 2 to 11 show embodiment 1 of the invention. In Figs. 2 to 11, the components identical with those of Fig. 1 are designated by the same reference numerals.

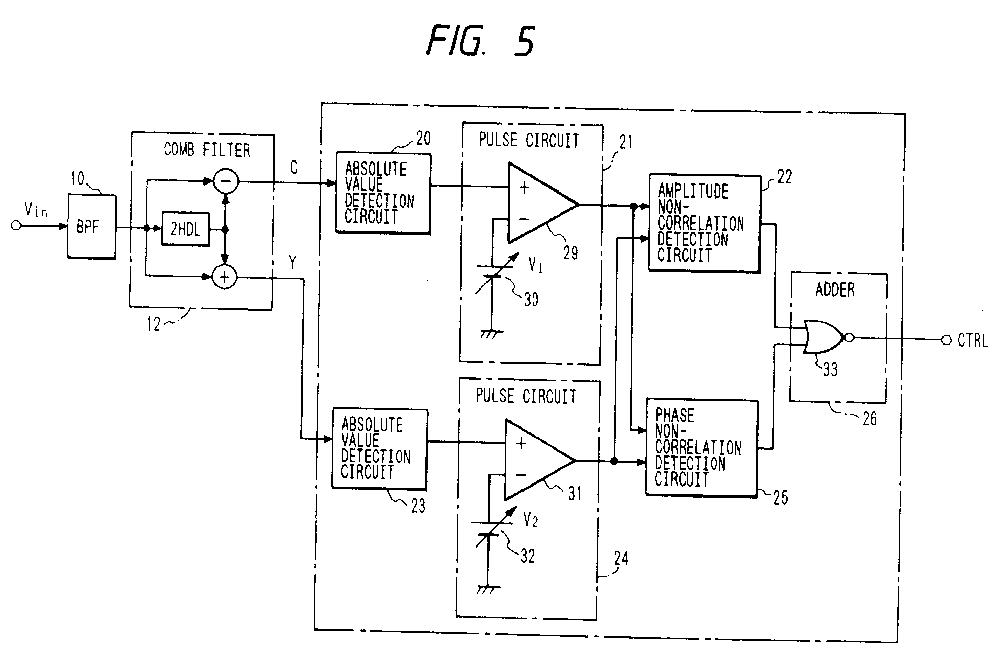

The reference numeral 10 designates a band-pass filter (BPF), 12 designates a comb filter (2H-line comb filter), 14 designates a delay line (DL), 29 and 31 designate comparators, 30 and 32 designate reference voltage setting units, 33 designates a NOR gate (See Figure 5); 36 and 37 designate AND gates, 38 designates a 2H pulse stretcher (See Figure 6); Vᵢₙ designates an input terminal, Cₒᵤₜ designates an output terminal for a chrominance signal, and Yₒᵤₜ designates an output terminal for a luminance signal.

The configuration of a luminance-chrominance signal separation circuit will be described with reference to Fig. 2.

Fig. 2 is a block diagram of a luminance-chrominance signal separation circuit according to the present invention. The luminance-chrominance signal separation circuit of this embodiment is a circuit which receives a PAL composite video and separates the video signal into a luminance signal Y and a chrominance signal C.

The luminance-chrominance signal separation circuit comprises the band-limiting circuit 11, the comb filter 12, the non-correlation part detection circuit 13, the delay line (DL) 14, the switch 15, the adders 16 and 17, etc.

The band-limiting circuit 11 receives a PAL composite video signal and allows only a signal in a predetermined frequency band (the pass band for the chrominance signal) to pass through the circuit.

The comb filter 12 (corresponding to the two-dimensional luminance-chrominance signal separator 6 of Fig. 1) is a two-dimensional Y/C separation filter which receives the video signal that has passed through the band-limiting circuit 11 and which then conducts two-dimensional signal processing to separate the video signal into a luminance signal Y and a chrominance signal C.

The non-correlation part detection circuit 13 receives the luminance signal Y output and the chrominance signal C output from the comb filter 12, detects amplitude and phase non-correlation parts from these signals, and produces the switch signal CTRL for controlling the closing and opening operations of the switch 15 (the detail of circuit will be described later).

The switch 15 is a switch (switch circuit) which is closed and opened in accordance with the switch signal CTRL from the non-correlation part detection circuit 13, thereby closing and opening a signal line via which the luminance signal Y output from the comb filter 12 is supplied toward the output terminal.

The delay line (DL) 14 (corresponding to the phase-adjusting circuit 7 of Fig. 1) receives the video signal according to the PAL system and delays the signal by a predetermined time, thereby adjusting the phase of the signal.

The adder 16 is a unit which adds the chrominance signal C output from the comb filter 12 and the luminance signal Y that is output via switch 15 from the comb filter 12 (the switch 15 is closed only when a non-correlation part is detected). The addition signal obtained in the adder 16 is output as the chrominance signal C to the output terminal Cₒᵤₜ.

The adder 17 is provided to the signal (the input video signal) that has been subjected in the phase adjustment in the delay line (DL) 14, and the chrominance signal C appearing at the output terminal Cₒᵤₜ.

In the adder 17, the adding operation is conducted while setting the chrominance signal C at the output terminal Cₒᵤₜ to be negative (in other words, the adder obtains the difference between the signal which has passed through the delay line 14 and the chrominance signal), and the resulting addition signal is output as the luminance signal Y to the output terminal Yₒᵤₜ.

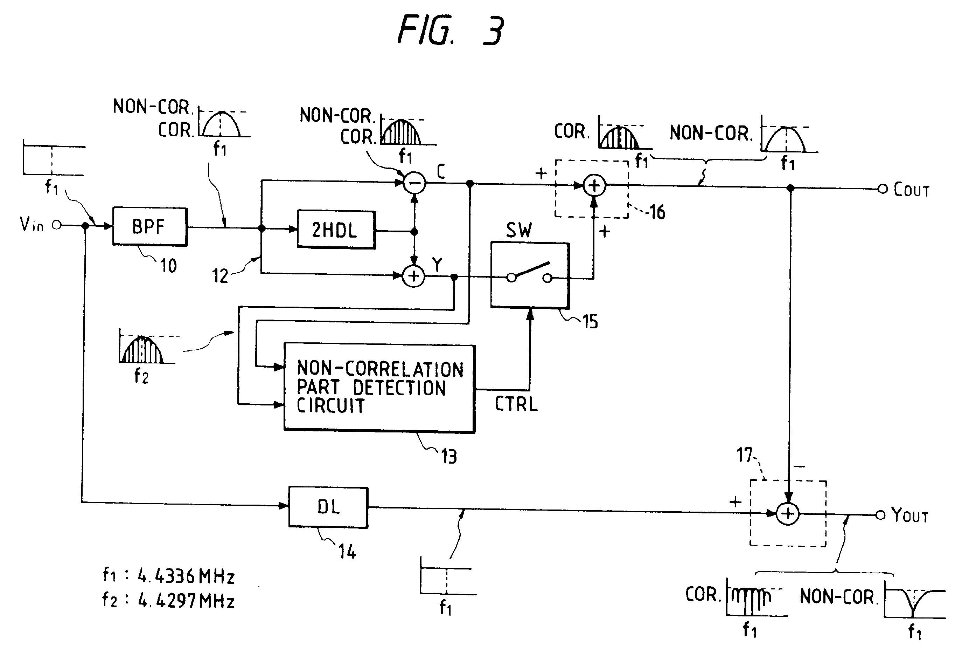

Fig. 3 shows a specific example of the circuit of Fig. 2. Hereinafter, the specific example of the luminance-chrominance signal separation circuit will be described with reference to Fig. 3.

In the example, the band-limiting circuit 11 in the luminance-chrominance signal separation circuit of Fig. 2 is configured by the band-pass filter (BPF) 10, and a 2H delay line (2HDL) is used in the comb filter 12 (2H correlation) (i.e., an example in which a 2H-line comb filter is used).

In the figure, f₁ and f₂ designate the center frequencies of the respective signals. In the example, f₁ = 4.4336 MHz, and f₂ = 4.4297 MHz. The circuit operates in the following manner.

When a video signal according to the PAL system is input to the input terminal Vᵢₙ, the signal is supplied to the band-pass filter 10 and the delay line (DL) 14. The band-pass filter 10 allows only a signal, among the input video signal, which is in a predetermined frequency band (the pass band for the chrominance signal, or the frequency band in the vicinity of f₁ = 4.4336 MHz), to pass through the filter.

The comb filter 12 separates the signal which has passed through the band-pass filter 10 by the 2H-line correlation, into the luminance signal Y and the chrominance signal C. When a non-correlation part is detected, however, it is impossible to conduct the Y/C separation.

The non-correlation part detection circuit 13 receives the luminance signal Y and the chrominance signal C which are output from the comb filter 12, and, from these signals, detects amplitude and phase non-correlation parts. In the example, an amplitude non-correlation part is detected with respect to the chrominance signal and the luminance signal, and a phase non-correlation part is detected with respect to the chrominance signal C.

In accordance with the detection result, the non-correlation part detection circuit 13 outputs the switch signal CTRL to the switch 15. When an amplitude non-correlation part of the luminance signal and the chrominance signal is not detected or a phase non-correlation part of the chrominance signal is not detected (i.e., in the correlation period), the switch signal CTRL which is to be output to the switch 15 is set to be high level. When amplitude non-correlation parts of the signals, and a phase non-correlation part of the chrominance signal are detected, the switch signal CTRL is set to be low level (or a pulse of low level is output) so that the switch 15 is closed.

When the switch signal CTRL is high level (in the correlation period), the switch 15 is opened so that the luminance signal Y output from the comb filter 12 is not supplied to the adder 16.

When the non-correlation part detection circuit 13 detects a non-correlation part and outputs the switch signal CTRL of low level to the switch 15, however, the switch 15 is closed. This causes the luminance signal Y output from the comb filter 12 to be supplied to the adder 16 via the switch 15. In the adder, the luminance signal Y is then added to the chrominance signal C from the comb filter 12. The addition signal obtained in the adder 16 is output as the chrominance signal C to the output terminal Cₒᵤₜ.

When a non-correlation part is not detected by the non-correlation part detection circuit 13, therefore, only the chrominance signal C from the comb filter 12 is output as the chrominance signal to the output terminal Cₒᵤₜ.

In contrast, when a non-correlation part is detected, an addition signal of the chrominance signal C output and the luminance signal Y output from the comb filter 12 (in this case, the addition signal is substantially identical with the output signal of the band-pass filter 10) is output as the chrominance signal to the output terminal Cₒᵤₜ.

On the other hand, in the delay line (DL) 14, the video signal according to the PAL system is delayed by the predetermined time and then supplied to the adder 17. The adder 17 adds the signal (luminance signal + chrominance signal) which has passed through the delay line (DL) 14 and the chrominance signal appearing at the output terminal Cₒᵤₜ (the addition is done while setting the chrominance signal to be negative). The resulting luminance signal is output to the output terminal Yₒᵤₜ for the luminance signal. In the example, the adder 17 performs the process of (luminance signal + chrominance signal) - (chrominance signal) = (luminance signal), and then outputs the luminance signal Y to the output terminal Yₒᵤₜ.

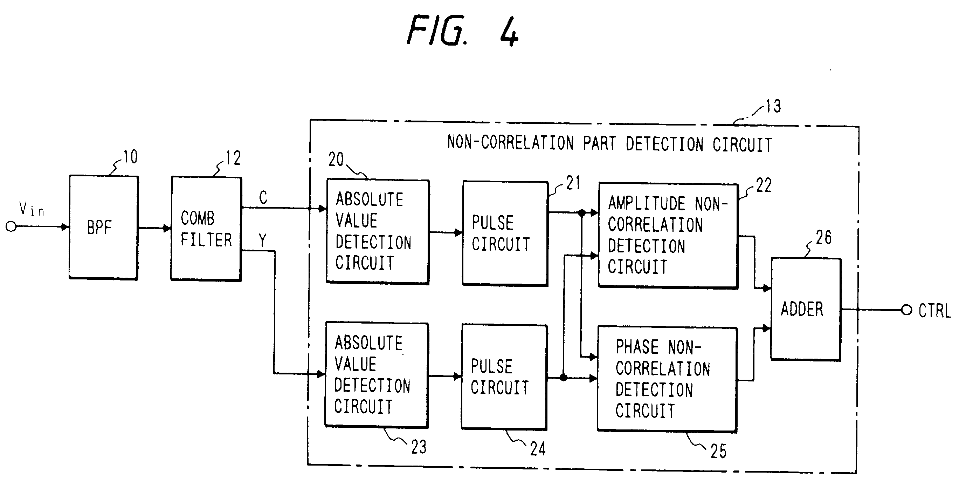

Fig. 4 is a block diagram of the non-correlation part detection circuit. Hereinafter, the non-correlation part detection circuit will be described with reference to Fig. 4.

In the example, the non-correlation part detection circuit 13 consists of the absolute value detection circuits 20 and 23, the pulse circuits 21 and 24, the amplitude non-correlation detection circuit 22, the phase non-correlation detection circuit 25, and the addition circuit 26.

The non-correlation part detection circuit 13 receives the chrominance signal and the luminance signal which are output from the comb filter 12, and, from these signals, detects an amplitude non-correlation part of the chrominance signal C, and a phase non-correlation part of the chrominance signal C. The detection circuit further produces the switch signal CTRL for the switch 15.

In the example, the absolute value detection circuit 20 receives the chrominance signal output from the comb filter 12 and detects the absolute value of the chrominance signal. The pulse circuit 21 compares the absolute value detected by the absolute value detection circuit 20 with a predetermined threshold to convert the signal into a pulse.

The absolute value detection circuit 23 receives the luminance signal output from the comb filter 12 and detects the absolute value of the luminance signal. The pulse circuit 24 compares the absolute value detected by the absolute value detection circuit 23 with a predetermined threshold to convert the signal into a pulse.

The amplitude non-correlation detection circuit 22 receives the output pulses of the pulse circuits 21 and 24 to detect an amplitude non-correlation part of the luminance signal and the chrominance signal.

The phase non-correlation detection circuit 25 receives the output pulses of the pulse circuits 21 and 24 to detect a phase non-correlation part of the chrominance signal C.

The addition circuit 26 adds the output signal of the amplitude non-correlation detection circuit 22 and that of the phase non-correlation detection circuit 25, and produces the switch signal CTRL for the switch 15. Hereinafter, a specific example of the non-correlation part detection circuit will be described in detail.

Fig. 5 shows specific example 1 of the circuit of Fig. 4. Hereinafter, the specific example 1 of the non-correlation part detection circuit of Fig. 4 will be described with reference to Fig. 5.

In the example, the pulse circuit 21 consists of the comparator 29 and the reference voltage setting unit 30, and the pulse circuit 24 consists of the comparator 31 and the reference voltage setting unit 32. The addition circuit 26 consists of the NOR gate 33.

In each of the reference voltage setting units 30 and 32, the reference voltage which is to be set as the threshold is variable and previously set to be an adequate value. The components will be described.

The absolute value detection circuit 20 receives the chrominance signal C output from the comb filter 12 and detects the absolute value of the chrominance signal C. This detection is done as preprocessing for the pulse conversion of the pulse circuit 21. The absolute value of the chrominance signal (a signal which varies in both the positive and negative regions) is detected and then output to the pulse circuit 21.

The absolute value detection circuit 23 receives the luminance signal Y output from the comb filter 12 and detects the absolute value of the luminance signal Y. This detection is done as preprocessing for the pulse conversion of the pulse circuit 24. The absolute value of the luminance signal (a signal which varies in both the positive and negative regions) is detected and then output to the pulse circuit 24.

In the comparator 29 of the pulse circuit 21, the absolute value detected by the absolute value detection circuit 20 is compared with the predetermined threshold which is the reference voltage V₁ of the reference voltage setting unit 30, to convert the absolute value into a pulse.

In this case, when the absolute value is greater than the threshold V₁, the comparator 29 outputs a signal of high level, and, when the absolute value is smaller than the threshold V₁, outputs a signal of low level. As a result of the comparison, the absolute value detected by the absolute value detection circuit 20 is converted into a pulse. In other words, when the absolute value detected by the absolute value detection circuit 20 is greater than the threshold V₁, the comparator 29 outputs a pulse of high level.

In the comparator 31 of the pulse circuit 24, the absolute value detected by the second absolute value detection circuit 23 is compared with the predetermined threshold which is the reference voltage V₂ of the reference voltage setting unit 32, to convert the absolute value into a pulse.

In this case, when the absolute value is greater than the threshold V₂, the comparator 31 outputs a signal of high level, and, when the absolute value is smaller than the threshold V₂, outputs a signal of low level. As a result of the comparison, the absolute value detected by the absolute value detection circuit 23 is converted into a pulse. In other words, when the absolute value detected by the absolute value detection circuit 23 is greater than the threshold V₂, the comparator 31 outputs a pulse of high level.

The amplitude non-correlation detection circuit 22 receives the outputs of the comparators 29 and 31, and detects an amplitude non-correlation part of the luminance signal and the chrominance signal.

In the detection process, when both the outputs of the comparators 29 and 31 are simultaneously signals of high level, for example, a signal (high-level signal) indicative that an amplitude non-correlation part is detected is output. In the case other than the above, a signal (low-level signal) indicative that an amplitude non-correlation part is not detected is output.

The phase non-correlation detection circuit 25 receives the outputs of the comparators 29 and 31, and detects a phase non-correlation part of the chrominance signal. In the detection process, when the output of the comparator 29 is a low-level signal which is lower than a specific level and that of the comparator 31 is a high-level signal, for example, the phase non-correlation detection circuit 25 outputs a signal (high-level signal) indicative that a phase non-correlation part is detected. In the case other than the above, the circuit outputs a signal (low-level signal) indicative that a phase non-correlation part is not detected is output.

The NOR gate 33 of the addition circuit 26 logically adds the output of the amplitude non-correlation detection circuit 22 and that of the phase non-correlation detection circuit 25, and produces the switch signal CTRL. The other configuration is the same as that of Fig. 4, and therefore its description is omitted.

Fig. 6 shows another specific example of the circuit of Fig. 4. Hereinafter, the specific example of the non-correlation part detection circuit of Fig. 4 will be described with reference to Fig. 6.

In the example, the amplitude non-correlation detection circuit 22 consists of the AND gate 36, and the phase non-correlation detection circuit 25 consists of the AND gate 37 and the 2H pulse stretcher 38.

The AND gate 36 of the amplitude non-correlation detection circuit 22 performs the AND operation on the output pulses of the comparators 29 and 31 to detect an amplitude non-correlation part.

Specifically, when both the output pulses of the comparators 29 and 31 are simultaneously high level, the AND gate 36 outputs a signal of high level, and, in the case other than the above, outputs a signal low level.

When there is no amplitude non-correlation part of the chrominance signal C, for example, the comparator 29 outputs a pulse but the comparator 31 does not output a pulse. Therefore, the output of the AND gate 36 is kept to be low level.

In contrast, when there is a non-correlation part in the amplitude of the chrominance signal C, both the comparators 29 and 31 output a pulse with the result that the output of the AND gate 36 is changed to be high level. In this way, the AND gate 36 detects an amplitude non-correlation part of the luminance signal and the chrominance signal.

In the phase non-correlation detection circuit 25, the AND gate 37 performs the AND operation on the output of the 2H pulse stretcher 38 and the output pulse of the comparator 31 of the pulse circuit 24, thereby detecting a phase non-correlation part of the chrominance signal.

The 2H pulse stretcher 38 is a circuit which receives the output pulse of the comparator 29 and generates a 2H pulse. The 2H pulse stretcher 38 is activated when the output pulse of the comparator 29 falls. When no pulse of high level is input during the 2H period starting from the activation, the 2H pulse stretcher 38 outputs a signal of high level, and the output is then reset to be low level.

During the 2H period starting from a fall of the output pulse of the comparator 29, when the next pulse of high level is not input, therefore, the 2H pulse stretcher 38 outputs a signal of high level. During the other period, the 2H pulse stretcher outputs a signal of low level.

In the phase non-correlation detection circuit 25, when a high-level signal is input from the comparator 31 during the period which starts from the fall (a change from high level to low level) of the output pulse of the comparator 29 and in which the 2H pulse stretcher 38 outputs the high-level signal, the AND gate 37 outputs a high-level signal. This operation enables a phase non-correlation part of the chrominance signal to be detected.

The NOR gate 33 of the addition circuit 26 conducts addition processing or logically adds the output of the AND gate 36 and that of the AND gate 37, thereby producing the switch signal CTRL.

The switch signal CTRL output from the NOR gate 33 is a signal which, when it is high level, opens the switch 15, and, when it is low level, closes the switch 15. The other configuration is the same as that of Fig. 5, and therefore its description is omitted.

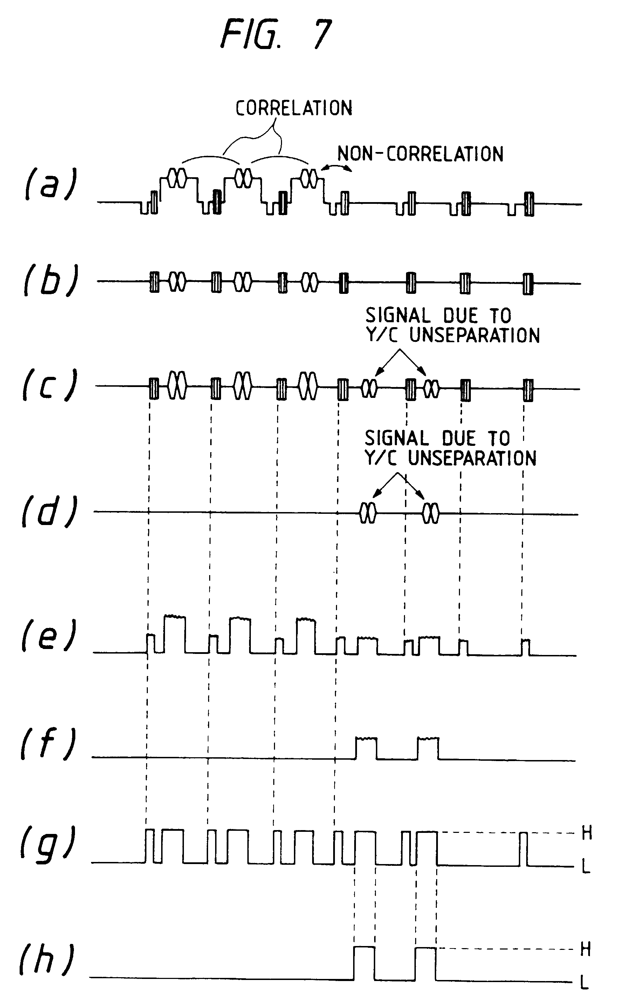

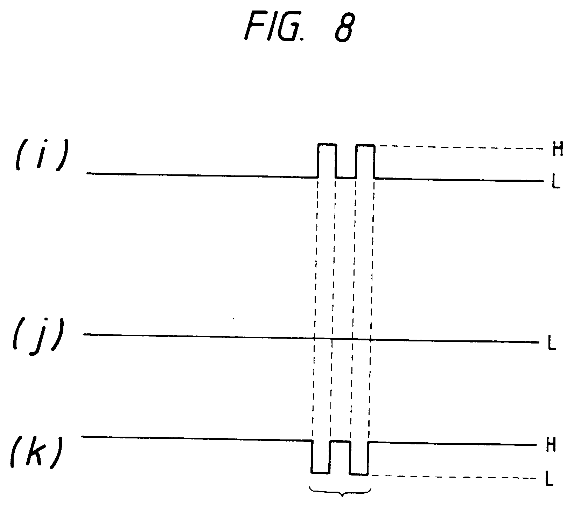

The operation of the luminance-chrominance separation circuit of the present invention will be described with reference to waveform charts of Figs. 7 and 8.
(1) Figs. 7 and 8 are charts showing waveforms of various portions, in the case where there is a non-correlation part in the amplitude of the C component.
   Hereinafter, the operation of the luminance-chrominance signal separation circuit in the case where there is a non-correlation part in the amplitude of the C component will be described with reference to the waveforms of the figures.
   In Figs. 7 and 8, (a) shows the signal to be input to the input terminal Vᵢₙ (a video signal according to the PAL system), (b) shows the output signal of the band-pass filter (BPF) 10, (c) shows the chrominance signal C output from the comb filter 12, (d) shows the luminance signal Y output from the comb filter 12, (e) shows the output of the absolute value detection circuit 20, (f) shows the output of the absolute value detection circuit 23, (g) shows the output of the pulse circuit 21, (h) shows the output of the pulse circuit 24, (i) shows the output of the amplitude non-correlation detection circuit 22. (j) shows the output of the phase non-correlation detection circuit 25, and (k) shows the switch signal CTRL output from the addition circuit 26.
   [i] In the operation in a normal state where there is a correlation in the amplitude of the C component:
      In the state where the input signal is normal and there is a correlation (see the waveform charts in the left half of the figures), the circuit operates as follows. In the state, the comb filter 12 normally conducts the separation of the luminance signal Y and the chrominance signal C. Therefore, the luminance signal Y output from the comb filter 12 does not include any component of the chrominance signal C, and the non-correlation part detection circuit 13 detects no non-correlation part.
      Consequently, the switch signal CTRL output from the addition circuit 26 of the non-correlation part detection circuit 13 is high level so that the switch remains opened. This inhibits the luminance signal Y of the comb filter 12 from being supplied to the adder 16.
      In this state, the chrominance signal C which has been separated in the comb filter 12 passes through the adder 16 as it is, and is then supplied to the output terminal Cₒᵤₜ. In other words, the chrominance signal C which has been separated in the comb filter 12 is output from the output terminal Cₒᵤₜ.
      On the other hand, in the adder 17, the signal which has passed through the delay line (DL) 14 (i.e., the signal which is obtained by delaying the input video signal) is added to the signal which is supplied to the output terminal Cₒᵤₜ for the chrominance signal (the addition is done while setting the chrominance signal to be negative), so that the separated luminance signal Y is output via the output terminal Yₒᵤₜ for the luminance signal.
      In the example, the adder 17 performs the process of (luminance signal + chrominance signal) - (chrominance signal) = luminance signal in the manner described above, and supplies the separated luminance signal Y to the output terminal (Yₒᵤₜ).
      As described above, in a normal operation where there is a correlation, the chrominance signal C separated by the comb filter 12 can be output via the output terminal Cₒᵤₜ, and the luminance signal Y can be obtained from the chrominance signal C and the input video signal.
   [ii] The operation in a state where there is a non-correlation part in the amplitude of the C component:
      In the case where a non-correlation part occurs in an input signal (see the waveform charts in the right half of the figures), the circuit operates as follows. When a non-correlation part occurs in the amplitude of the chrominance signal C component, the comb filter 12 cannot normally conduct the separation of the luminance signal Y and the chrominance signal C.
      Consequently, a signal due to the state that the separation cannot be done is produced in the chrominance signal C output and the luminance signal Y output of the comb filter 12. Therefore, the absolute values of the signals are respectively detected by the absolute value detection circuits 20 and 23, and the detected absolute values are supplied to the pulse circuits 21 and 24 to be converted into a pulse.
      The amplitude non-correlation detection circuit 22 simultaneously receives the pulses from the pulse circuits 21 and 24, and then outputs a pulse (high level) indicative of the detection of an amplitude non-correlation. At this time, the phase non-correlation detection circuit 25 does not detect a phase non-correlation part, and hence the output of the detection circuit 25 is kept to be low level.
      Therefore, the addition circuit 26 outputs the switch signal CTRL of low level. This switch signal CTRL causes the switch 15 to be closed.

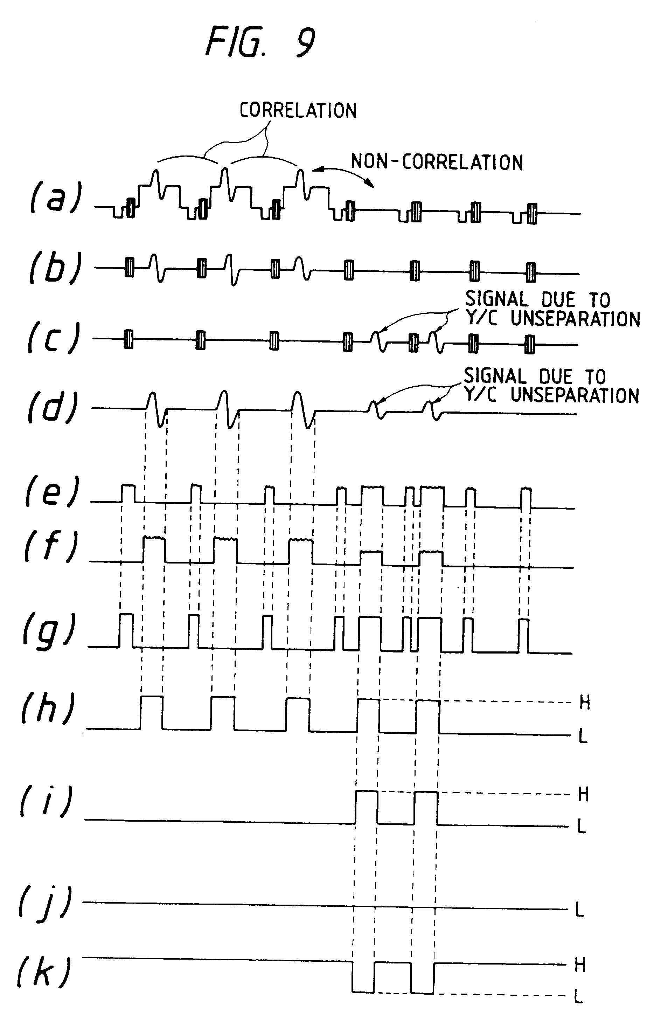

(2) Fig. 9 is chart 3 showing waveforms of various portions in the case where there is a non-correlation part in the amplitude of the Y component). Hereinafter, the operation of the luminance signal/chrominance signal separation circuit in the case where there is a non-correlation part in the amplitude of the Y component will be described with reference to the waveforms of the figure.
   In Fig. 9, (a) shows the signal to be input to the input terminal Vᵢₙ (a video signal according to the PAL system), (b) shows the output signal of the band-pass filter (BPF) 10, (c) shows the chrominance signal C output from the comb filter 12, (d) shows the luminance signal Y output from the comb filter 12, (e) shows the output of the absolute value detection circuit 20, (f) shows the output of the absolute value detection circuit 23, (g) shows the output of the pulse circuit 21, (h) shows the output of the pulse circuit 24, (i) shows the output of the amplitude non-correlation detection circuit 22. (j) shows the output of the phase non-correlation detection circuit 25, and (k) shows the switch signal CTRL output from the addition circuit 26.
   [i]: The operation in a normal state where there is a correlation in the amplitude of the Y component:
      In the state where the input signal is normal and there is a correlation (see the waveform charts in the left half of the figure), the circuit operates in the same manner as the above-described case of Figs. 7 and 8.
   [ii]: The operation in a state where there is a non-correlation part in the amplitude of the Y component:
      In the case where a non-correlation part occurs in an input signal (see the waveform charts in the right half of the figure), the circuit operates as follows. When a non-correlation part occurs in the amplitude of the luminance signal Y, the comb filter 12 cannot normally conduct the separation of the luminance signal Y and the chrominance signal C.
      Consequently, a signal due to the state that the Y/C separation cannot be done is produced in the chrominance signal C output and the luminance signal Y output of the comb filter 12. In this case, since there is a non-correlation part in the luminance signal, the luminance Y signal remains to exist in two lines of the luminance signal Y output.
      The absolute value of the signal due to the state that the Y/C separation cannot be done is detected by the absolute value detection circuits 20 and 23, and the detected absolute values are converted into a pulse by the pulse circuits 21 and 24, respectively. These pulses are detected by the amplitude non-correlation detection circuit 22 in the same manner as described above, and the addition circuit 26 then outputs the switch signal CTRL of low level.

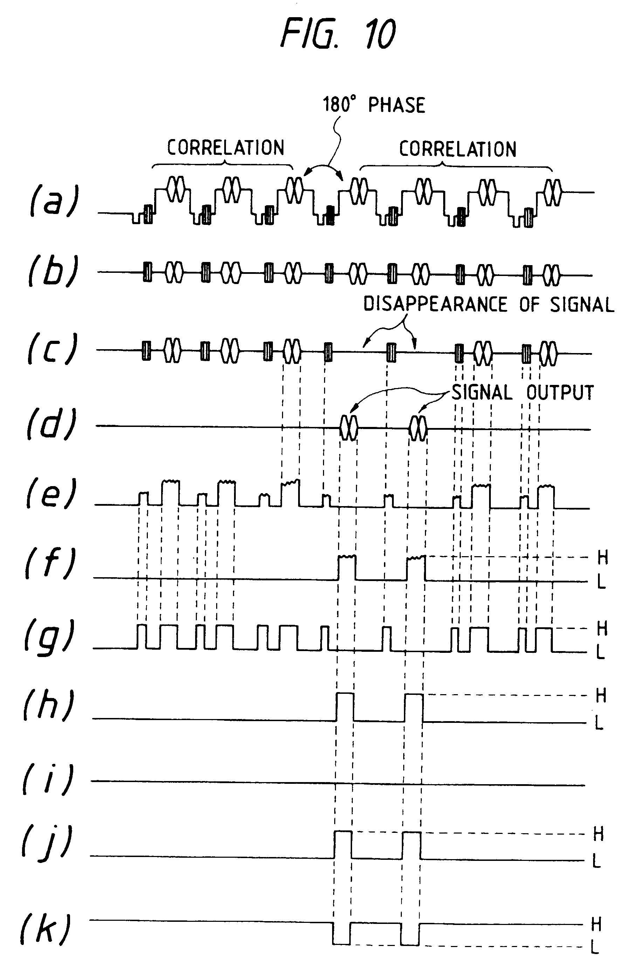

(3) Fig. 10 is chart 4 showing waveforms of various portions, in the case where there is a non-correlation part in the phase of the C component). Hereinafter, the operation of the luminance signal/chrominance signal separation circuit in the case where there is a non-correlation part in the phase of the C component will be described with reference to the waveforms of the figure.
   In Fig. 10, (a) shows the signal to be input to the input terminal Vᵢₙ (a video signal according to the PAL system), (b) shows the output signal of the band-pass filter (BPF) 10, (c) shows the chrominance signal C output from the comb filter 12, (d) shows the luminance signal Y output from the comb filter 12, (e) shows the output of the absolute value detection circuit 20, (f) shows the output of the absolute value detection circuit 23, (g) shows the output of the pulse circuit 21, (h) shows the output of the pulse circuit 24, (i) shows the output of the amplitude non-correlation detection circuit 22. (j) shows the output of the phase non-correlation detection circuit 25, and (k) shows the switch signal CTRL output from the addition circuit 26.
   [i]: The operation in a normal state where there is a correlation in the phase of the C component:
      In the state where the input signal is normal and there is a correlation (see the waveform charts in the left half of the figure), the circuit operates in the same manner as the above-described case of Figs. 7 and 8.
   [ii]: The operation in a state where there is a non-correlation part in the phase of the C component:

In the case where a non-correlation part occurs in the phase of the chrominance signal C (see the waveform charts in the right half of the figure), the circuit operates as follows.

Assuming that, in a state where there is a correlation part in an input signal, there occurs a non-correlation part in which the phase of the chrominance signal C is shifted by 180°, waveforms shown in Fig. 10 are obtained. In other words, when a non-correlation part (one line) in which the phase of the chrominance signal C is shifted by 180°, interference is produced in two lines.

This interference produces a state that the signal of the chrominance signal C output from the comb filter 12 is extinguished only in the two lines, and a signal is output into the luminance signal Y output from the comb filter 12 only in the two lines.

The non-correlation part detection circuit 13 detects this state. In the non-correlation part, since the chrominance signal C is not output, the absolute value detection circuit 20 cannot detect an absolute value. Accordingly, the pulse circuit 21 does not output a pulse.

In contrast, the absolute value detection circuit 23 detects the absolute value of the luminance signal Y output, and the pulse circuit 24 generates the pulse. Therefore, the phase non-correlation detection circuit 25 detects the phase non-correlation part of the chrominance signal on the basis of the pulse output from the pulse circuit 24, and outputs a signal (pulse) of high level.

In response to the output from the phase non-correlation detection circuit 25, the addition circuit 26 produces the switch signal CTRL and supplies the signal to the switch 15.

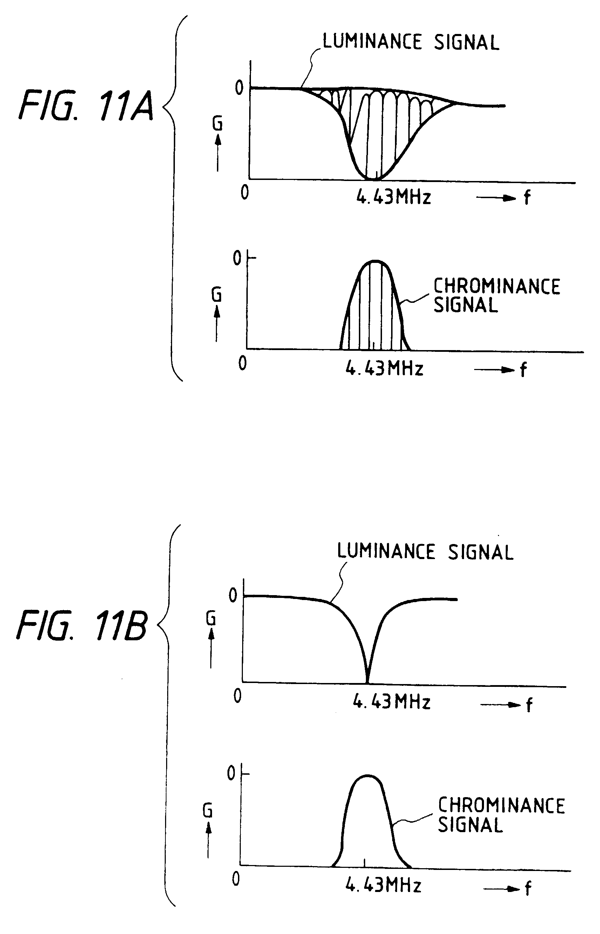

Fig. 11 shows the output characteristics of the luminance-chrominance separation circuit according to the present invention. Fig. 11A shows the output characteristics of a correlation part, and Fig. 11B shows the output characteristics of a non-correlation part. In the figure, the abscissa indicate a frequency (MHz) and the ordinates a gain G (dB).

As shown in the figure, in the luminance-chrominance signal separation circuit, the output characteristics in a correlation part are different from those in a non-correlation part.

More specifically, in a correlation part, the separation of the chrominance signal and the luminance signal is normally conducted, and hence the output characteristics of Fig. 11A (the signal separated in the comb filter) are obtained. In a non-correlation part, the output characteristics shown in Fig. 11B (the signal separated by a combination of the band-pass filter and a band-elimination filter) are obtained.

The signal in the correlation part shown in Fig. 11A has excellent comb-like characteristics in a wide range. The output characteristics in the non-correlation part are the same as those of the prior art example.

Although an embodiment has been described in the above, the invention may be realized also in the following manner.

The configuration of the non-correlation part detection circuit 13 is not restricted to the circuits of Figs. 5 and 6 and may be realized by a circuit having another configuration.

The amplitude non-correlation detection circuit, the phase non-correlation detection circuit, and the addition circuit may be realized by logical operations different from those of the embodiment.

As seen from the above description, the invention can attain the following effects.

In the prior art example described above, since high frequency components of the luminance signal are eliminated, there are tendencies to deteriorate the horizontal resolution. In contrast, when the correlation is established, the luminance-chrominance signal separation circuit of the invention can output a signal separated in a comb filter.

Consequently, the signal separation can be realized without eliminating high frequency components of the luminance signal, with the result that a high horizontal resolution is obtained.

According to the invention, when correlated signals are input, the circuit of the invention conducts the signal separation using a comb filter. Therefore, the cross color and dot crawl effects are improved. Contrary, when a non-correlation part where the signal separation cannot be conducted by the comb filter is to be detected, the signal separation can be done by a band-pass filter or the like which may be identical with that used in the prior art example. Therefore, the signal separation performance as a whole can be improved.

Since the signal separation is conducted while automatically distinguishing correlation and non-correlation parts from each other, the signal separation can always be conducted in an optimum manner.

For example, it may be considered that a comb filter is used in the non-correlation part detection circuit which detects a non-correlation part. In such a circuit, however, the detection of a non-correlation part requires four lines (4H correlation). In other words, when a comb filter is used in the non-correlation part detection circuit 13 in addition to the comb filter 12 of the embodiment described above, a 4-line non-correlation part is formed.

In contrast, according to the invention, the non-correlation part detection circuit does not use a comb filter, and hence the detection of a non-correlation part can be done with using only two lines (2H correlation). Consequently, the period of a deteriorated image can be shortened, and the horizontal resolution can be improved.

Furthermore, according to the invention, it is required to use only one comb filter, which is expensive. As compared with a circuit which uses two comb filters, therefore, it is possible to reduce the production cost.

The invention can provide a luminance-chrominance signal separation circuit which has an excellent performance of separating the luminance signal and the chrominance signal from each other, and which is inexpensive. Consequently, it is expected to improve the image quality of an AV apparatus.

In the detection of a non-correlation part, an amplitude non-correlation part of the luminance signal and the chrominance signal, and a phase non-correlation part of the chrominance signal are detected. Therefore, it is possible to completely detect non-correlation parts which affect the image quality, so that the image deterioration due to a non-correlation part is suppressed to a minimum level.

## Claims

1. A luminance-chrominance signal separation circuit which receives a PAL video signal to separate the PAL video signal into a luminance signal (Y) and a chrominance signal (C), said circuit comprising:
a band-limiting circuit (11) which allows a signal in a predetermined frequency band including a chrominance signal in the video signal, to pass therethrough
a two-dimensional luminance-chrominance signal separator (6) which receives the signal which has passed through said band-limiting circuit, said two-dimensional luminance-chrominance signal separator conducting two-dimensional signal processing to separate the signal into a luminance signal (Y) and a chrominance signal (C);
a non-correlation part detection circuit (13) which receives the luminance signal (Y) output from said two-dimensional luminance-chrominance signal separation circuit (6) to detect non-correlation parts of the input video signal;
a switch (15) which is closed and opened in accordance with a non-correlation part detection signal from said non-correlation part detection circuit (13), thereby closing or opening a signal line for the luminance signal (Y) from said separator;
a phase-adjusting circuit (7) which adjusts the phase of the video signal input to said luminance-chrominance signal separation circuit;
a first adding circuit (16) which adds the chrominance signal (C) output from said two-dimensional luminance-chrominance signal separator (6) and the luminance signal (Y) output via said switch (15) to output a chrominance signal to an output terminal (Cₒᵤₜ); and
a second adding circuit (17) which adds the chrominance signal at said output terminal (Cₒᵤₜ) and a video signal which has passed through said phase-adjusting circuit (7) to output a luminance signal to an output terminal (Yₒᵤₜ);
wherein
said non-correlation part detection circuit (13) also receives the chrominance signal (C) output from said two-dimensional luminance-chrominance signal separator (6), and said non-correlation part detection circuit (13) detects amplitude non-correlation parts of the chrominance signal (C) and the luminance signal (Y), and a phase non-correlation part of the chrominance signal (C).

2. A luminance-chrominance signal separation circuit according to claim 1, CHARACTERIZED IN THAT
said non-correlation part detection circuit (13) comprises:
a first absolute value detection circuit (20) which detects an absolute value of the chrominance signal (C) output from said two-dimensional luminance-chrominance signal separator (6);
a first pulse circuit (21) which compares an output of said first absolute value detection circuit (20) with a predetermined threshold to convert the output into a pulse signal;
a second absolute value detection circuit (23) which detects an absolute value of the luminance signal (Y) output from said two-dimensional luminance-chrominance signal separator (6);
a second pulse circuit (24) which compares an output of said second absolute value detection circuit (23) with a predetermined threshold to convert the output into a pulse signal;
an amplitude non-correlation detection circuit (22) which detects amplitude non-correlation parts of the chrominance signal (C) and the luminance signal (Y) on the basis of the output pulse of said first pulse circuit (21) and the output pulse of said second pulse circuit (24);
a phase non-correlation detection circuit (25) which detects a phase non-correlation part of the chrominance signal (C) on the basis of the output pulse of said first pulse circuit (21) and the output pulse of said second pulse circuit (24); and
an addition circuit (26) which conducts an addition of an output of said amplitude non-correlation detection circuit (22) and an output of said phase non-correlation detection circuit (25), thereby producing a switch signal (CTRL) for said switch (15).

3. A luminance-chrominance signal separation circuit according to claim 2, CHARACTERIZED IN THAT
said non-correlation part detection circuit (13) is adapted to operate such that:
when neither the amplitude non-correlation parts of the chrominance signal (C) and the luminance signal (Y), nor a phase non-correlation part of the chrominance signal (C) are detected, a switch signal (CTRL) for making said switch (15) open is output from said addition circuit (26), and,
when amplitude non-correlation parts of the chrominance signal (C) and the luminance signal (Y), or a phase non-correlation part of the chrominance signal (C) are detected, a switch signal (CTRL) for making said switch (15) close is output from said addition circuit (26).

4. A luminance-chrominance signal separation circuit according to claim 1, CHARACTERIZED IN THAT
said non-correlation part detection circuit (13) is adapted to operate such that only when it detects the amplitude non-correlation parts of the chrominance signal (C) and the luminance signal (Y), or a phase non-correlation part of the chrominance signal (C), said first adding circuit (16) outputs an addition signal of the chrominance signal (C) output from said two-dimensional luminance-chrominance signal separator (6) and the luminance signal (Y) output via said switch (15) as a chrominance signal to said output terminal (Cₒᵤₜ).

5. A luminance-chrominance signal separation circuit according to claim 1, CHARACTERIZED IN THAT
the second adding circuit (17) is adapted to output an addition signal representative of the difference between the video signal which has passed through said phase-adjusting circuit (7) and the inverted output of said first adding circuit which represent the chrominance signal.

## Patentansprüche

1. Schaltung zur Trennung des Luminanzsignals von dem Chrominanzsignal, die ein PAL-Videosignal erhält, um das PAL-Videosignal in ein Luminanzsignal (Y) und ein Chrominanzsignal (C) zu trennen, mit:
einer Bandbegrenzerschaltung (11), die ein Signal in einem vorbestimmten Frequenzband, das ein Chrominanzsignal in dem Videosignal umfaßt, hindurchläßt;
einer zweidimensionalen Luminanz-Chrominanz-Signal-Trennschaltung (6), die das durch die Bandbegrenzerschaltung hindurchgelassene Signal erhält und eine zweidimensionale Signalverarbeitung zur Trennung des Signals in ein Luminanzsignal (Y) und ein Chrominanzsignal (C) durchführt;
einer Detektorschaltung (13) für einen nicht-korrelierenden Teil, die das von der Trennschaltung (6) abgegebene Luminanzsignal (Y) erhält, um nicht-korrelierende Teile des eingegebenen Videosignals zu erfassen;
einem Schalter (15), der nach Maßgabe des von der Detektorschaltung (13) erhaltenen, nicht-korrelierende Teile angebenden Erfassungssignals geschlossen und geöffnet wird, wodurch eine Signalleitung für das Luminanzsignal (Y) von der Trennschaltung geschlossen oder geöffnet wird;
einer Phaseneinstellschaltung (7), die die Phase des an die Trennschaltung gegebenen Videosignals einstellt;
einer ersten Addierschaltung (16), die das von der zweidimensionalen Trennschaltung (6) abgegebene Chrominanzsignal (C) und das über den Schalter (15) abgegebene Luminanzsignal addiert, um ein Chrominanzsignal an einen Ausgangsanschluß (Cₒᵤₜ) abzugeben, und
einer zweiten Addierschaltung (17), die das Chrominanzsignal an dem Ausgangsanschluß (Cₒᵤₜ) und ein durch die Phaseneinstellschaltung (7) hindurchgelangtes Videosignal addiert, um ein Luminanzsignal an einen Ausgangsanschluß (Yₒᵤₜ) abzugeben;
wobei
die Detektorschaltung (13) für einen nicht-korrelierenden Teil auch das von der Trennschaltung (6) abgegebene Chrominanzsignal (C) erhält und die Detektorschaltung (13) nicht-korrelierende Amplitudenteile des Chrominanzsignals (C) und des Luminanzsignals (Y) und einen nicht-korrelierenden Phasenteil des Chrominanzsignals (C) erfaßt.

2. Schaltung nach Anspruch 1, **dadurch gekennzeichnet,** daß die Detektorschaltung (13) für nicht-korrelierende Teile (13) aufweist:
eine erste Absolutwert-Detektorschaltung (20), die einen Absolutwert des von der Trennschaltung (6) abgegebenen Chrominanzsignals (C) erfaßt;
eine erste Impulsschaltung (21), die ein Ausgangssignal der ersten Absolutwert-Detektorschaltung (20) mit einem vorbestimmten Schwellenwert vergleicht, um das Ausgangssignal in ein Impulssignal umzuformen;
eine zweite Absolutwert-Detektorschaltung (23), die einen Absolutwert des von der Trennschaltung (6) abgegebenen Luminanzsignals (Y) erfaßt;
eine zweite Impulsschaltung (24), die ein Ausgangssignal der zweiten Absolutwert-Detektorschaltung (23) mit einem vorbestimmten Schwellenwert vergleicht, um das Ausgangssignal in ein Impulssignal umzuformen;
eine Detektorschaltung (22) für nicht-korrelierende Amplituden, die nicht-korrelierende Amplitudenteile des Chrominanzsignals (C) und des Luminanzsignals (Y) aufgrund der Ausgangsimpulse der ersten Impulsschaltung (21) und der Ausgangsimpulse der zweiten Impulsschaltung (24) erfaßt;
eine Detektorschaltung (25) für nicht-korrelierende Phasen, die einen nicht-korrelierenden Phasenteil des Chrominanzsignals (C) aufgrund des Ausgangsimpulses der ersten Impulsschaltung (21) und des Ausgangsimpulses der zweiten Impulsschaltung (24) erfaßt, und
eine Additionsschaltung (26), die eine Addition eines Ausgangssignals der Detektorschaltung (22) für nicht-korrelierende Amplituden und eines Ausgangssignals der Detektorschaltung (25) für nicht-korrelierende Phasen durchführt, wodurch ein Schaltersignal (CTRL) für den Schalter (15) erzeugt wird.

3. Schaltung nach Anspruch 2, **dadurch gekennzeichnet,** daß die Detektorschaltung (13) für nicht-korrelierende Teile ausgebildet ist, um derart zu arbeiten, daß:
wenn weder die nicht-korrelierenden Amplitudenteile des Chrominanzsignals (C) und des Luminanzsignals (Y), noch ein nicht-korrelierender Phasenteil des Chrominanzsignals (C) erfaßt werden, ein Schaltersignal (CTRL) zum Öffnen des Schalters (15) von der Additionsschaltung (26) abgegeben wird, und
wenn nicht-korrelierende Amplitudenteile des Chrominanzsignals (C) und des Luminanzsignals (Y) oder ein nicht-korrelierender Phasenteil des Chrominanzsignals (C) erfaßt werden, ein Schaltersignal (CTRL) zum Schließen des Schalters (15) von der Additionsschaltung (26) abgegeben wird.

4. Schaltung nach Anspruch 1, **dadurch gekennzeichnet,** daß die Detektorschaltung (13) für nicht-korrelierende Teile ausgebildet ist, um derart zu arbeiten, daß:
nur wenn sie nicht-korrelierende Amplitudenteile des Chrominanzsignals (C) und des Luminanzsignals (Y) oder einen nicht-korrelierenden Phasenteil des Chrominanzsignals (C) erfaßt, die erste Addierschaltung (16) ein Additionssignal des Chrominanzsignals (C), das von der Trennschaltung (6) abgegeben ist, und des Luminanzsignals (Y), das über den Schalter (15) abgegeben wird, als ein Chrominanzsignal an den Ausgangsanschluß (Cₒᵤₜ) abgibt.

5. Schaltung nach Anspruch 1, **dadurch gekennzeichnet,** daß die zweite Addierschaltung (17) so ausgebildet ist, daß sie ein die Differenz zwischen dem Videosignal, das durch die Phaseneinstellschaltung (7) hindurchgelangt ist, und dem invertierten Ausgangssignal der ersten Addierschaltung angebendes Additionssignal abgibt, das das Chrominanzsignal angibt.

## Revendications

1. Un circuit de séparation de signaux de luminance-chrominance qui reçoit un signal vidéo PAL pour séparer le signal vidéo PAL en un signal de luminance (Y) et un signal de chrominance (C), ce circuit comprenant :
un circuit de limitation de bande (11) qui permet le passage à travers lui d'un signal dans une bande de fréquence prédéterminée incluant un signal de chrominance dans le signal vidéo,
un séparateur de signaux de luminance-chrominance bidimensionnel (6) qui reçoit le signal de luminance qui a traversé le circuit de limitation de bande, ce séparateur de signaux de luminance-chrominance bidimensionnel effectuant un traitement de signal bidimensionnel pour séparer le signal en un signal de luminance (Y) et un signal de chrominance (C);
un circuit de détection de parties de non-corrélation (13) qui reçoit le signal de luminance (Y) émis par le circuit de séparation de signaux de luminance-chrominance bidimensionnel (6), pour détecter des parties de non-corrélation du signal vidéo d'entrée;
un interrupteur (15) qui est fermé et ouvert conformément à un signal de détection de parties de non-corrélation provenant du circuit de détection de parties de non-corrélation (13), pour ainsi fermer ou ouvrir une ligne de signal pour le signal de luminance (Y) provenant du séparateur;
un circuit d'ajustement de phase (7) qui ajuste la phase du signal vidéo qui est appliqué au circuit de séparation de signaux de luminance-chrominance;
un premier circuit d'addition (16) qui additionne le signal de chrominance (C) émis par le séparateur de signaux de luminance-chrominance bidimensionnel (6) et le signal de luminance (Y) émis par l'intermédiaire du commutateur (15), pour émettre un signal de chrominance vers une borne de sortie (Cₒᵤₜ); et
un second circuit d'addition (17) qui additionne le signal de chrominance sur la borne de sortie (Cₒᵤₜ) et un signal vidéo qui a traversé le circuit d'ajustement de phase (7), pour émettre un signal de luminance vers une borne de sortie (Yₒᵤₜ);
dans lequel
le circuit de détection de parties de non-corrélation (13) reçoit également le signal de chrominance (C) qui est émis par le séparateur de signaux de luminance-chrominance bidimensionnel (6), et le circuit de détection de parties de non-corrélation (13) détecte des parties de non-corrélation d'amplitude du signal de chrominance (C) et du signal de luminance (Y), et une partie de non-corrélation de phase du signal de chrominance (C).

2. Un circuit de séparation de signaux de luminance-chrominance selon la revendication 1, CARACTERISE EN CE QUE
le circuit de détection de parties de non-corrélation (13) comprend :
un premier circuit de détection de valeur absolue (20) qui détecte une valeur absolue du signal de chrominance (C) qui est émis par le séparateur de signaux de luminance-chrominance bidimensionnel (6);
un premier circuit de génération d'impulsions (21) qui compare avec un seuil prédéterminé un signal de sortie du premier circuit de détection de valeur absolue (20), pour convertir le signal de sortie en un signal consistant en une impulsion;
un second circuit de détection de valeur absolue (23) qui détecte une valeur absolue du signal de luminance (Y) qui est émis par le séparateur de signaux de luminance-chrominance bidimensionnel (6);
un second circuit de génération d'impulsions (24) qui compare avec un seuil prédéterminé un signal de sortie du second circuit de détection de valeur absolue (23), pour convertir le signal de sortie en un signal consistant en une impulsion;
un circuit de détection de non-corrélation d'amplitude (22) qui détecte des parties de non-corrélation d'amplitude du signal de chrominance (C) et du signal de luminance (Y), sur la base de l'impulsion de sortie du premier circuit de génération d'impulsions (21) et de l'impulsion de sortie du second circuit de génération d'impulsions (24);
un circuit de détection de non-corrélation de phase (25) qui détecte une partie de non-corrélation de phase du signal de chrominance (C) sur la base de l'impulsion de sortie du premier circuit de génération d'impulsions (21) et de l'impulsion de sortie du second circuit de génération d'impulsions (24); et
un circuit d'addition (26) qui effectue une addition d'un signal de sortie du circuit de détection de non-corrélation d'amplitude (22) et d'un signal de sortie du circuit de détection de non-corrélation de phase (25), pour produire ainsi un signal de commutation (CTRL) pour l'interrupteur (15).

3. Un circuit de séparation de signaux de luminance-chrominance selon la revendication 2, CARACTERISE EN CE QUE
le circuit de détection de parties de non-corrélation (13) est adapté pour fonctionner de façon que :
lorsque ni les parties de non-corrélation d'amplitude du signal de chrominance (C) et du signal de luminance (Y), ni une partie de non-corrélation de phase du signal de chrominance (C) ne sont détectées, un signal de commutation (CTRL) pour ouvrir l'interrupteur (15) est émis par le circuit d'addition (26); et,
lorsque les parties de non-corrélation d'amplitude du signal de chrominance (C) et du signal de luminance (Y), ou une partie de non-corrélation de phase du signal de chrominance (C) sont détectées, un signal de commutation (CTRL) pour fermer l'interrupteur (15) est émis par le circuit d'addition (26).

4. Un circuit de séparation de signaux de luminance-chrominance selon la revendication 1, CARACTERISE EN CE QUE
le circuit de détection de parties de non-corrélation (13) est adapté pour fonctionner de façon que :
seulement lorsqu'il détecte les parties de non-corrélation d'amplitude du signal de chrominance (C) et du signal de luminance (Y), ou une partie de non-corrélation de phase du signal de chrominance (C), le premier circuit d'addition (16) émet vers la borne de sortie (Cₒᵤₜ), à titre de signal de chrominance, un signal qui résulte de l'addition du signal de chrominance (C) qui est émis par le séparateur de signaux de luminance-chrominance bidimensionnel (6), et du signal de luminance (Y) qui est émis par l'intermédiaire de l'interrupteur (15).

5. Un circuit de séparation de signaux de luminance-chrominance selon la revendication 1, CARACTERISE EN CE QUE
le second circuit d'addition (17) est adapté pour émettre un signal d'addition représentatif de la différence entre le signal vidéo qui a traversé le circuit d'ajustement de phase (7), et le signal de sortie inversé du premier circuit d'addition qui représente le signal de chrominance.
